# FASCICULE DE BREVET EUROPEEN

(11) **EP 0 759 889 B1**
(45) Date de publication et mention de la délivrance du brevet: **30.09.1998**
(21) Numéro de dépôt: 95920969.3
(22) Date de dépôt: 22.05.1995
(51) Int. Cl.: C02F 1/469, C02F 9/00, B01D 61/44

(54) **PROCEDE DE VALORISATION D'UN EFFLUENT LIQUIDE ACIDE CONTENANT DES METAUX LOURDS**
VERFAHREN ZUR VERWERTUNG EINES SCHWERMETALLE ENTHALTENDEN UND SAUREN ABWASSERS
PROCESS FOR VALORIZING A LIQUID ACID EFFLUENT CONTAINING HEAVY METALS

(30) Priorité: 20.05.1994 FR 9406170
(43) Date de publication de la demande: 05.03.1997
(73) Titulaire: RHODIA CHIMIE, 92408 Courbevoie Cédex (FR)
(72) Inventeur: HORBEZ, Dominique, F-95130 Franconville (FR)
(74) Mandataire: Delenne, Marc
(86) Numéro de dépôt international: FR9500666
(87) Numéro de publication internationale: WO9532155

(56) Documents cités:
- EP-A- 0 405 619
- WO-A-85/01670
- WO-A-88/02652
- WO-A-90/11819
- FR-A- 2 629 811
- US-A- 5 258 109
- US-A- 5 281 318
- PATENT ABSTRACTS OF JAPAN vol. 13 no. 379 (C-628) [3727] ,22 Août 1989 & JP,A,01 130783 (SHINKO PFAUDLER CO LTD) 23 Mai 1989,
- DESALINATION, vol. 91, no. 2, Avril 1993 AMSTERDAM, NL, pages 163-175, D. RAUCQ 'Production of sulphuric acid and caustic soda by electromembrane processes'

## Description

La présente invention concerne un procédé de traitement d'un effluent liquide acide contenant des métaux lourds, notamment d'un effluent constitué par les eaux de lavage des fumées d'incinération de déchêts.

Plus particulièrement, elle est relative à un procédé de traitement d'un effluent liquide acide contenant des métaux lourds conduisant à la production de base et d'acide valorisables et évitant les rejets liquides en milieu naturel.

Les rejets liquides, dans le milieu naturel, sont soumis à une législation qui est en pleine évolution. Les eaux de lavage (ou d'épuration) des fumées d'usines d'incinération de déchêts notamment d'ordures ménagères ou de déchêts industriels, d'effluents industriels du type effluents soufrés, par exemple les acides sulfuriques usés, sont des milieux acides contenant des métaux lourds. De même certains sols sont pollués par la présence de tels métaux.

Des projets récents de réglementation prévoient une interdiction ou une limitation très poussée du rejet dans le milieu naturel des eaux usées, après neutralisation à la chaux ou à la soude, provenant du lavage (ou de l'épuration) des fumées d'incinération de déchets.

L'invention a notamment pour but de fournir un procédé de traitement des effluents liquides acides contenant des métaux lourds permettant non seulement l'élimination desdits métaux de l'effluent, mais conduisant aussi à la production de liquides, en particulier de base et d'acide, valorisables et évitant les rejets liquides en milieu naturel.

A cet effet, l'invention propose un procédé de valorisation d'un effluent liquide acide contenant des métaux lourds, caractérisé en ce qu'il consiste à :
(i) éliminer lesdits métaux lourds dudit effluent, de la façon suivante:
   (1) ajouter au moins un agent de captation ou fixation de métaux lourds audit effluent,
   (2) soumettre l'effluent obtenu à l'issue du stade (1) à une séparation solide/liquide, de manière à obtenir, d'une part, une boue comprenant ledit agent chargé en métaux lourds, et, d'autre part, un perméat constitué d'une solution aqueuse saline contenant au moins 2 % en poids de sels,
(il) concentrer la solution aqueuse saline obtenue à l'issue de l'étape (i) par évaporation ou électrodialyse, de manière à obtenir une solution aqueuse saline contenant au moins 10 % en poids de sels,
(iii) soumettre la solution aqueuse saline obtenue à l'issue de l'étape (ii) à une électro-électrodialyse, ce en quoi on récupère, séparément, au moins une base, au moins un acide et une solution aqueuse saline épuisée,
(iv) éventuellement, recycler la solution aqueuse saline épuisée obtenue à l'issue de l'étape (iii) vers l'étape (ii).

Par métaux lourds, on entend en particulier les métaux de valence supérieure ou égale à 2, de préférence égale à 2, et notamment ceux choisis parmi l'antimoine, l'arsenic, le bismuth, le cadmium, le chrome, le cobalt, le cuivre, l'étain, le manganèse, le mercure, le molybdène, le nickel, l'or, le plomb, le thallium, le tungstène, le zinc, l'aluminium, le fer, les métaux de la famille des actinides.

Les métaux lourds plus particulièrement visés sont le cadmium, le chrome, le cuivre, le mercure, le nickel, le plomb, le zinc, l'aluminium et le fer.

L'effluent liquide à traiter peut être constitué par un effluent aqueux acide, notamment par les eaux de lavage (ou d'épuration) des fumées d'incinération de déchets, notamment d'ordures ménagères, de déchets industriels, notamment chlorés, soufrés, nitrés, fluorés, de déchets hospitaliers, par les eaux de lavage de matière solide, comme de la terre, contenant des métaux lourds, par des effluents aqueux de traitement de surface.

Cet effluent liquide à traiter présente généralement un pH fortement acide, par exemple de l'ordre de 1 à 2.

Il contient habituellement au moins un acide, tel que, notamment, de l'acide chlorhydrique, de l'acide sulfurique, de l'acide nitrique et/ou de l'acide fluorhydrique.

En général, il contient principalement à titre d'acide de l'acide chlorhydrique, notamment lorsqu'il est constitué par les eaux de lavage (ou d'épuration) des fumées d'incinération d'ordures ménagères ou de déchêts industriels chlorés, ou de l'acide sulfurique, notamment lorsqu'il est constitué par les eaux de lavage (ou d'épuration) des fumées d'incinération de déchets industriels soufrés.

L'un des avantages du procédé selon l'invention est d'ailleurs de régénérer le ou les acides contenus dans l'effluent liquide à traiter, acides qui, à l'issue dudit procédé, peuvent être valorisés, notamment comme acides techniques, compte tenu notamment de leurs teneurs très faibles en métaux lourds.

L'étape (i) du procédé consiste à éliminer les métaux lourds dudit effluent liquide.

L'étape (i) consiste à :
(1) ajouter au moins un agent de captation (ou fixation) de métaux lourds audit effluent,
(2) soumettre l'effluent obtenu à l'issue du stade (1) à une séparation solide/liquide, de manière à obtenir, d'une part, une boue comprenant ledit agent chargé en métaux lourds, et, d'autre part, un perméat constitué d'une solution aqueuse saline contenant au moins 2 % en poids de sels.

De préférence, dans cette deuxième variante, l'effluent liquide est, préalablement au stade (1), soumis à une pré-neutralisation, par addition d'au moins une base, notamment de soude.

Cette addition de base est effectuer de manière à élever le pH de l'effluent liquide à traiter, l'effluent obtenu après cette pré-neutralisation présentant un pH compris, en général, entre 3 et 5, de préférence de l'ordre de 4, et à précipiter ainsi les hydroxydes de fer et/ou d'aluminium.

L'ajout d'agent de captation (ou fixation) de métaux lourds est effectué de manière à ce que, de préférence, l'effluent obtenu à l'issue du stade (1) présente un pH compris entre 8 et 10, en particulier de l'ordre de 9.

Ledit agent de captation (ou fixation) de métaux lourds peut être choisi parmi les zéolites, les argiles, les carbonates, les hydroxycarbonates, les matériaux échangeurs d'ions.

Il est, de manière avantageuse, choisi parmi les matériaux comprenant au moins un composé du type silicate ou aluminosilicate, au moins un composé du type carbonate et, de préférence, au moins un support (en particulier une argile), les matériaux comprenant au moins un composé du type silicate ou aluminosilicate et au moins un support (en particulier une argile), les matériaux comprenant au moins un composé du type carbonate et au moins un support (en particulier une argile) : ces matériaux sont décrits et revendiqués dans les demandes de brevet FR 94/05214 et FR 94/05215.

La demande de brevet FR 94/05214 concerne un agent de captation (ou fixation) de cations de métaux lourds comprenant au moins un composé du type silicate ou aluminosilicate (composé A), qui est de préférence un silicate ou un aluminosilicate de métal alcalin, notamment de potassium ou, préférentiellement, de sodium, et au moins un composé du type carbonate (composé B), qui est de préférence un carbonate de métal alcalin, notamment de sodium, ou un hydroxycarbonate choisi parmi l'hydrotalcite et la dawsonite. Cet agent présente, en général, un rapport en moles CO₃²-/SiO₂ compris entre 0,05 et 10, de préférence entre 0,33 et 3. De manière préférée, cet agent comprend en outre au moins un support, en particulier une argile (par exemple une montmorillonite), par exemple à une teneur comprise entre 10 et 90 % en poids.

Un agent particulier décrit dans cette demande de brevet comprend un silicate de sodium, un carbonate de sodium et, de préférence, un support, notamment une argile.

Pour préparer les agents décrits dans cette demande de brevet, on peut effectuer, dans un premier temps, un mélange d'une solution aqueuse du composé A et soit d'une solution aqueuse du composé B, le pH de cette dernière pouvant être préalablement ajusté au pH de la première solution, par exemple par ajout d'une base, notamment de soude, soit du composé B solide ; la solution obtenue à partir de ce mélange est, généralement après avoir été soumise à une agitation, séchée, notamment par un procédé flash (tel que, par exemple, décrit dans US 4970030) ou, de préférence, par atomisation.

Dans le cas où l'on souhaite préparer un agent contenant un support, en particulier une argile, tel que décrit dans cette demande de brevet, on peut opérer comme exposé ci-dessus, le support étant de préférence additionné au mélange de la solution aqueuse du composé A et soit de la solution aqueuse du composé B, le pH de cette dernière pouvant être préalablement ajusté au pH de la première solution, par exemple par ajout d'une base, notamment de soude, soit du composé B solide.Cette addition est habituellemnt effectuée lors de l'agitation dudit mélange, c'est-à-dire que le mélange est soumis à une agitation avant, pendant et après l'ajout du support.

La demande de brevet FR 94/05215 concerne un agent de captation (ou fixation) de cations de métaux lourds comprenant au moins un support, notamment une argile (par exemple une montmorillonite), et soit un composé du type silicate ou aluminosilicate (composé A), en particulier un silicate ou un aluminosilicate de métal alcalin, par exemple de potassium ou, préférentiellement, de sodium, soit, de préférence, au moins un composé du type carbonate (composé B), en particulier un carbonate de métal alcalin, par exemple de sodium, ou un hydroxycarbonate choisi parmi l'hydrotalcite et la dawsonite. La teneur en support, en particulier en argile, de l'agent est habituellement comprise entre 10 et 90 % en poids.

Pour préparer les agents décrits dans cette demande de brevet, on peut introduire un support, en particulier une argile, en général sous agitation, soit dans une solution aqueuse du composé A ou soit dans une solution aqueuse du composé B ; la solution alors obtenue est, généralement après avoir été soumise à une agitation, séchée, notamment par un procédé flash (tel que, par exemple, décrit dans US 4970030) ou, de préférence, par atomisation.

Les agents décrits dans les deux demandes de brevet citées précédemment peuvent présenter une taille moyenne en masse des particules comprise entre 15 et 100 µm.

Dans le cadre de la présente invention, on emploie, de manière préférée, au moins un agent tel que décrit dans la demande de brevet FR 94/05214.

En général, l'agent de captation (ou fixation) des métaux lourds est, lors du stade (1), ajouté sous forme pulvérulente (poudre) et, par exemple, selon une granulométrie moyenne de l'ordre de 20 µm, à l'effluent liquide, contenu dans une enceinte habituellement maintenue sous agitation. On peut poursuivre l'agitation, par exemple pendant 5 à 60 minutes.

L'effluent liquide à traiter peut contenir 0,5 mg/l à 100 g/l de métaux lourds.

Par exemple, lorsqu'il consiste en des eaux de lavage (ou d'épuration) des fumées d'incinération de déchêts, il peut en particulier contenir 0,5 à 3 g/l de métaux lourds ; lorsqu'il consiste en des effluents aqueux de traitement de surface, il peut notamment en contenir 1 à 150 g/l.

Quand on emploie un agent tel que décrit dans la demande de brevet FR 94/05214, la quantité dudit agent à ajouter à l'effluent liquide à traiter est telle que le rapport molaire (SiO₂+CO₃²⁻)/(métaux présents dans l'effluent liquide à traiter) soit, en général, compris entre 0,7 et 2,5, par exemple entre 1,0 et 2,2, notamment entre 1,1 et 1,9. On entend ici par métaux présents dans l'effluent liquide à traiter les métaux lourds et le calcium.

L'opération de séparation solide/liquide (stade (2)) peut être effectuée par décantation ou filtration, éventuellement en présence d'un agent coagulant ou floculant, tel que, par exemple, le chlorure ferrique.

Elle est avantageusement effectuée à l'aide d'un module d'ultra- ou de micro-filtration à membranes.

L'utilisation d'un tel module permet, notamment, de diminuer sensiblement le volume de boue générée et d'éviter l'emploi d'agents coagulants ou floculants lors de la séparation liquide/solide.

On effectue généralement une régulation du pH à la sortie du stade (2) en agissant sur les concentrations de la base employée lors de la pré-neutralisation et/ou de l'agent utilisé lors du stade (1).

Dans l'étape (i), la boue issue de la séparation solide/liquide peut être soumise, après addition éventuelle de polymère, à une filtration, par exemple à l'aide d'un filtre-presse, ou à une centrifugation afin de récupérer une matière (un précipité) solide contenant les métaux lourds. Cette matière solide, notamment dans le cas où elle est constituée par un agent chargé en métaux lourds plus particulièrement quand ledit agent est un de ceux décrits dans la demande de brevet FR 94//05215 ou, de préférence, dans la demande de brevet FR 94/05214, peut ensuite subir un traitement de stabilisation (ou immobilisation), notamment par vitrification. La phase liquide obtenue à l'issue de la filtration ou de la centrifugation peut être recyclée vers le stade (1).

Dans l'étape (i), le perméat issu de la séparation solide/liquide est constitué d'une solution aqueuse saline sensiblement exempte de métaux lourds (elle contient en général moins de 15 mg/l de cations de métaux lourds au total) et ayant une teneur en calcium réduite par rapport à celle de l'effluent liquide acide initial.

Cette solution aqueuse saline obtenue à l'issue de l'étape (i) contient au moins 2 % en poids de sels, en particulier 2 à 10 % en poids de sels.

Il est à noter que, lorsque l'effluent liquide acide contient du mercure, celui-ci peut être complètement éliminé à l'aide d'une opération additionnelle, prévue à la sortie de l'étape (i), cette opération mettant en oeuvre, par exemple, un traitement par un sulfure ou par un agent réducteur.

Selon le procédé de l'invention, la solution aqueuse saline obtenue à l'issue de l'étape (i) est ensuite concentrée (au niveau des sels qu'elle contient), dans une étape (ii), de manière à obtenir une solution aqueuse saline contenant au moins 10 % en poids de sels, en particulier 10 à 20 % en poids de sels.

La nature des sels contenus dans cette solution aqueuse saline, comme dans la solution aqueuse saline obtenue à l'issue de l'étape (i), dépend notamment de la nature de la base éventuellement employée dans l'étape (i) et/ou de la nature du ou des acides éventuellement présents dans l'effluent liquide acide à traiter.

Ces sels sont ainsi généralement choisis parmi le chlorure de sodium, le sulfate de sodium, le nitrate de sodium et le fluorure de sodium, notamment dans le cas où l'on utilise de la soude dans l'étape (i).

Ainsi, lorsque l'effluent liquide acide à traiter contient principalement à titre d'acide de l'acide chlorhydrique, notamment lorsqu'il est constitué par les eaux de lavage (ou d'épuration) des fumées d'incinération d'ordures ménagères ou de déchets industriels chlorés, alors le chlorure de sodium est présent dans les solutions aqueuses salines précitées.

De même, lorsque l'effluent liquide acide contient principalement à titre d'acide de l'acide sulfurique, notamment lorsqu'il est constitué par les eaux de lavage (ou d'épuration) des fumées d'incinération de déchêts industriels soufrés, alors le sulfate de sodium est présent dans les solutions aqueuses salines précitées.

Lesdites solutions aqueuses salines peuvent évidemment contenir un mélange de plusieurs sels, notamment de chlorure de sodium et de sulfate de sodium.

Cette étape (il) est préférentiellement effectuée par évaporation, notamment par évaporation classique ou, de manière très préférée, par évaporation avec compression mécanique des vapeurs, ou par électrodialyse.

Cette étape de concentration permet notamment d'amener la concentration en sels de la solution aqueuse saline à un niveau acceptable pour l'étape (iii) suivante de régénération de base et d'acide par électro-électrodialyse.

La concentration, en particulier par électrodialyse, permet également d'augmenter la conductivité de la solution aqueuse saline, de diminuer le coût énergétique de l'étape (iii) de régénération par électro-électrodialyse et, éventuellement, de réduire le volume de solution aqueuse saline à traiter dans cette étape (iii).

Un traitement intermédiaire sur résine entre l'étape (i) et l'étape (il), ou entre l'étape (il) et l'étape (iii) est possible, afin d'optimiser éventuellement l'élimination des métaux lourds et du calcium avant l'étape (iii).

L'étape (iii) consiste à soumettre la solution aqueuse saline obtenue à l'issue de l'étape (ii) à une électro-électrodialyse, de manière à récupérer, séparément, au moins une base et au moins un acide.

On récupère également une solution aqueuse saline épuisée, que l'on peut recycler éventuellement (étape (iv)) vers l'étape (il).

La nature de la (ou des) base(s) et de l'acide ou des acides récupérés dépend essentiellement de la nature des sels contenus dans la solution aqueuse saline obtenue à l'issue de l'étape (il) et donc traitée par électro-électrodialyse et donc notamment de la nature de la base éventuellement employée dans l'étape (i) et/ou de la nature du ou des acides éventuellement présents dans l'effluent liquide acide à traiter.

Ainsi, la base récupérée à l'issue de l'étape (iii) est généralement de la soude.

L'acide récupéré à l'issue de l'étape (iii) est généralement au moins un acide choisi parmi l'acide chlorhydrique, l'acide sulfurique, l'acide nitrique et l'acide fluorhydrique et, de préférence, parmi l'acide chlorhydrique et l'acide sulfurique.

On peut évidemment récupérer à l'issue de l'étape (iii) un mélange de plusieurs acides, notamment d'acide chlorhydrique et d'acide sulfurique.

L'étape (iii) du procédé selon l'invention consiste donc en une étape de régénération de base et d'acide.

Dans un mode particulier de réalisation de l'invention, le sel contenu dans les solutions salines mentionnées précédemment est le chlorure de sodium, la base régénérée est de la soude et l'acide régénéré est de l'acide chlorhydrique.

Dans un autre mode particulier de réalisation de l'invention, le sel contenu dans les solutions salines mentionnées précédemment est le sulfate de sodium, la base régénérée est de la soude et l'acide régénéré est de l'acide sulfurique.

L'étape (iii) du procédé selon l'invention consiste en une électro-électrodialyse.

L'étape (iii) peut alors être effectuée dans tout dispositif d'électro-électrodialyse adéquat.

Cette électro-électrodialyse est de préférence effectuée dans une cellule d'électrolyse à trois ou quatre compartiments.

Le type de cellule d'électrolyse utilisée dépend, en général, de la nature des sels contenus dans la solution aqueuse saline obtenue à l'issue de l'étape (ii).

Selon l'invention, cette électro-électrodialyse peut être effectuée dans une cellule d'électrolyse à trois compartiments, comportant une membrane sélectivement perméable aux anions, une membrane sélectivement perméable aux cations, une cathode et une anode.

Ainsi, par exemple dans le cas du sulfate de sodium (sel à anion non oxydable), la régénération de la soude et de l'acide sulfurique peut être réalisée dans ce type de cellule à trois compartiments, avec oxydation anodique de l'eau, telle que décrite notamment dans la demande de brevet EP-A-0449071. On peut procéder de même dans le cas du nitrate de sodium ou du fluorure de sodium.

Selon l'invention, cette électro-électrodialyse peut être également effectuée dans une cellule d'électrolyse à trois compartiments, comportant une membrane sélectivement perméable aux anions, une membrane sélectivement perméable aux cations, une cathode et une anode à hydrogène, telle que décrite notamment dans la demande de brevet EP-A-0522382

Par exemple, dans le cas du sulfate de sodium, la régénération de la soude et de l'acide sulfurique et, dans le cas du chlorure de sodium, la régénération de la soude et de l'acide chlorhydrique, peuvent ainsi être réalisées dans ce type de cellule à trois compartiments, avec oxydation de l'hydrogène.

Selon l'invention, cette électro-électrodialyse, notamment dans le cas du chlorure de sodium, peut aussi être effectuée dans une cellule d'électrolyse à quatre compartiments, comportant une membrane sélectivement perméable aux anions, une membrane sélectivement perméable aux cations, une cloison perméable aux cations (qui est, de préférence, une membrane sélectivement perméable aux cations), une cathode et une anode.

Ainsi, par exemple dans le cas du chlorure de sodium, la régénération de la soude et de l'acide chlorhydrique est de préférence réalisée dans ce type de cellule à quatre compartiments, avec oxydation anodique de l'eau.

On peut ainsi employer une cellule à quatre compartiments telle que décrite dans le brevet BE1004126. L'électrolyte utilisé dans le compartiment anodique est alors généralement une solution d'un acide à anion non oxydable, par exemple une solution d'acide sulfurique.

Il est à noter que l'emploi, dans le stade (1) de l'étape (i), d'un agent de captation (ou fixation) de métaux lourds tel que décrit dans la demande de brevet FR 94/05214 ou, de préférence, dans la demande de brevet FR 94/05215, permet de réduire sensiblement la teneur en calcium de l'effluent qui va être ensuite soumis à une séparation solide/liquide, et donc des solutions aqueuses salines obtenues à l'issue des étape (i) et (ii), ce qui constitue un avantage non négligeable ; en effet, les membranes utilisées en électrodialyse et surtout en électro-électrodialyse sont assez sensibles à la présence trop élevée de calcium. Aussi, un prétraitement sur résine de la solution aqueuse saline obtenue à l'issue de l'étape (i) ou (il) n'est pas obligatoire.

La base récupérée (régénérée) à l'issue de l'étape (iii) présente, en général, une concentration d'au moins 10 %, en particulier comprise entre 10 et 35 %.

Chaque acide récupéré (régénéré) à l'issue de l'étape (iii) présente, en général, une concentration d'au moins 10 %, en particulier comprise entre 10 et 20 %.

Tout acide récupéré à l'issue de l'étape (iii) peut ensuite être soumis, éventuellement après séparation des autres acides récupérés, à une concentration en vue d'une valorisation ultérieure, notamment comme acide technique.

De même, la base récupérée à l'issue de l'étape (iii) peut être valorisée ; en particulier, elle peut être en partie ou, de préférence, en totalité recyclée vers le stade (1) de l'étape (i).

Ainsi, le procédé selon l'invention permet non seulement l'élimination des cations de métaux lourds de l'effluent initial, mais aussi la production de base et d'acide valorisables, évitant ainsi tout rejet liquide en milieu naturel.

## Revendications

1. Procédé de valorisation d'un effluent liquide acide contenant des métaux lourds, caractérisé en ce qu'il consiste à :
(i) éliminer lesdits métaux lourds dudit effluent, de la façon suivante :
(1) ajouter au moins un agent de captation ou fixation de métaux lourds audit effluent,
(2) soumettre l'effluent obtenu a l'issue du stade (1) à une séparation solide/liquide, de manière à obtenir, d'une part, une boue comprenant ledit agent chargé en métaux lourds, et, d'autre part, un perméat constitué d'une solution aqueuse saline contenant au moins 2 % en poids de sels,
(il) concentrer la solution aqueuse saline obtenue à l'issue de l'étape (i) par évaporation ou électrodialyse, de manière à obtenir une solution aqueuse saline contenant au moins 10 % en poids de sels,
(iii) soumettre la solution aqueuse saline obtenue à l'issue de l'étape (ii) à une électro-électrodialyse, ce en quoi on récupère, séparément au moins une base, au moins un acide et une solution aqueuse saline épuisée,
(iv) éventuellement, recycler la solution aqueuse saline épuisée obtenue à l'issue de l'étape (iii) vers rétape (ii).

2. Procédé selon la revendication 1, caractérisé en ce que ledit agent est choisi dans le groupe comprenant les zéolites, les argiles, les carbonates, les hydroxycarbonates, les matériaux échangeurs d'ions, les matériaux comprenant au moins un composé du type silicate ou aluminosilicate, au moins un composé du type carbonate et, de préférence, au moins un support, les matériaux comprenant au moins un composé du type silicate ou aluminosilicate et au moins un support, les matériaux comprenant au moins un composé du type carbonate et au moins un support.

3. Procédé selon la revendication 2, caractérisé en ce que ledit agent est un matériau comprenant au moins un composé du type silicate ou aluminosilicate, au moins un composé du type carbonate et, de préférence, au moins un support.

4. Procédé selon l'une des revendications 2 et 3, caractérisé en ce que ledit support est une argile.

5. Procédé selon l'une des revendications 1 à 4, caractérisé en ce que, préalablement au stade (1), ledit effluent liquide est soumis à une pré-neutralisation, par addition d'au moins une base, notamment de soude.

6. Procédé selon la revendication 5, caractérisé en ce que l'effluent liquide présente, après pré-neutralisation, un pH compris entre 3 et 5, de préférence de l'ordre de 4.

7. Procédé selon la revendication 6, caractérisé en ce que l'effluent obtenu à l'issue du stade (1) présente un pH compris entre 8 et 10, de préférence de l'ordre de 9.

8. Procédé selon l'une des revendications 5 à 7, caractérisé en ce que l'on effectue une régulation du pH à la sortie du stade (2) en agissant sur les concentrations de la base employée lors de la pré-neutralisation et/ou de l'agent utilisé lors du stade (1).

9. Procédé selon l'une des revendications 1 à 8, caractérisé en ce que l'opération de séparation solide/liquide est effectuée par décantation ou filtration.

10. Procédé selon la revendication 9, caractérisé en ce que l'opération de séparation solide/liquide est effectuée à l'aide d'un module d'ultra- ou de micro-filtration à membranes.

11. Procédé selon l'une des revendications 1 à 10, caractérisé en ce que la solution aqueuse saline obtenue à l'issue de l'étape (i) contient 2 à 10 % en poids de sels.

12. Procédé selon l'une des revendications 1 à 11, caractérisé en ce que la solution aqueuse saline obtenue à l'issue de l'étape (ii) contient 10 à 20 % en poids de sels.

13. Procédé selon l'une des revendications 1 à 12, caractérisé en ce que la base récupérée à l'issue de l'étape (iii) présente une concentration d'au moins 10 %, en particulier comprise entre 10 et 35 %.

14. Procédé selon l'une des revendications 1 à 13, caractérisé en ce que chaque acide récupéré à l'issue de l'étape (iii) présente une concentration d'au moins 10 %, en particulier comprise entre 10 et 20 %.

15. Procédé selon l'une des revendications 1 à 14, caractérisé en ce que chaque acide récupéré à l'issue de l'étape (iii) est ensuite soumis, éventuellement après séparation des autres acides, à une concentration en vue d'une valorisation ultérieure, notamment comme acide technique.

16. Procédé selon l'une des revendications 1 à 15, caractérisé en ce que la base récupérée à l'issue de l'étape (iii) est de la soude.

17. Procédé selon l'une des revendications 1 à 16, caractérisé en ce que l'acide récupéré à l'issue de l'étape (iii) est au moins un acide choisi parmi l'acide chlorhydrique, l'acide sulfurique, l'acide nitrique et l'acide fluorhydrique.

18. Procédé selon l'une des revendications 1 à 17, caractérisé en ce que lesdits sels sont choisis parmi le chlorure de sodium, le sulfate de sodium, le nitrate de sodium et le fluorure de sodium.

19. Procédé selon l'une des revendications 1 à 18, caractérisé en ce que l'étape (iii) d'électro-électrodialyse est effectuée à l'aide d'une cellule d'électrolyse à trois ou quatre compartiments.

20. Procédé selon la revendication 19, caractérisé en ce que l'étape (iii) d'électro-électrodialyse est effectuée à l'aide d'une cellule d'électrolyse à trois compartiments, comportant une membrane sélectivement perméable aux anions, une membrane sélectivement perméable aux cations, une cathode et une anode.

21. Procédé selon la revendication 19, caractérisé en ce que l'étape (iii) d'électro-électrodialyse est effectuée à l'aide d'une cellule d'électrolyse à quatre compartiments, comportant une membrane sélectivement perméable aux anions, une membrane sélectivement perméable aux cations, une cloison perméable aux cations, une cathode et une anode.

## Patentansprüche

1. Verfahren zur Verwertung eines Schwermetalle enthaltenden sauren Abwassers, dadurch gekennzeichnet, daß es besteht in:
(i) Entfernung der genannten Schwermetalle aus dem genannten Abwasser in der folgenden Art und Weise:
(1) Zugabe von mindestens einem Mittel zum Auffangen oder zur Fixierung der Schwermetalle in dem genannten Abwasser,
(2) Unterziehen des am Ende der Stufe (1) erhaltenen Abwassers einer Trennung fest/flüssig, so daß man einerseits einen Schlamm erhalt, der das genannte Mittel, beladen mit Schwermetallen, umfaßt und andererseits ein Permeat, das aus einer wäßrigen Salzlösung besteht, die mindestens 2 Gew.-% Salze enthält,
(ii) Konzentrieren der am Ende der Stufe (i) erhaltenen wäßrigen Salzlösung durch Verdampfen oder Elektrodialyse, so daß man eine wäßrige Salzlösung erhält, die mindestens 10 Gew.-% Salze enthält,
(iii) Unterziehen der am Ende der Stufe (ii) erhaltenen wäßrigen Salzlösung einer Elektro-Elektrodialyse, woraus man in getrennter Form mindestens eine Base, mindestens eine Säure und eine erschöpfte wäßrige Salzlösung gewinnt,
(iv) gegebenenfalls Zurückführen der am Ende der Stufe (iii) erhaltenen, erschöpften wäßrigen Salzlösung in die Stufe (ii).

2. Verfahren nach Anspruch 1, dadurch gekennzeichnet, daß das genannte Mittel aus der Gruppe gewählt wird, die umfaßt: die Zeolithe, die Tone, die Carbonate, die Hydroxycarbonate, die Ionenaustauscher-Materialien, die mindestens eine Verbindung vom Typ Silicat oder Alumosilicat umfassenden Materialien, mindestens eine Verbindung vom Typ Carbonat und vorzugsweise mindestens einen Träger, die mindestens eine verbindung vom Typ Silicat oder Alumosilicat und mindestens einen Träger umfassenden Materialien, die mindestens eine Verbindung vom Typ Carbonat und mindestens einen Träger umfassenden Materialien.

3. Verfahren nach Anspruch 2, dadurch gekennzeichnet, daß das genannte Mittel ein Material ist, das mindestens eine Verbindung vom Typ Silicat oder Alumosilicat, mindestens eine Verbindung vom Typ Carbonat und vorzugsweise mindestens einen Träger umfaßt.

4. Verfahren nach einem der Ansprüche 2 und 3, dadurch gekennzeichnet, daß der genannte Träger ein Ton ist.

5. Verfahren nach einem der Ansprüche 1 bis 4, dadurch gekennzeichnet, daß vor der Stufe (1) das genannte Abwasser einer Vor-Neutralisation durch Zugabe von mindestens einer Base, insbesondere Natriumhydroxid, unterzogen wird.

6. Verfahren nach Anspruch 5, dadurch gekennzeichnet, daß das Abwasser nach der Vor-Neutralisation einen pH-Wert zwischen 3 und 5, vorzugsweise in der Größenordnung von 4 aufweist.

7. Verfahren nach Anspruch 6, dadurch gekennzeichnet, daß das am Ende der Stufe (1) erhaltene Abwasser einen pH-Wert zwischen 8 und 10, vorzugsweise in der Größenordnung von 9 aufweist.

8. Verfahren nach einem der Ansprüche 5 bis 7, dadurch gekennzeichnet, daß man am Ausgang der Stufe (2) eine Regulierung des pH-Wertes durchführt, indem man auf die Konzentrationen der bei der Vor-Neutralisation verwendeten Base und/oder auf das bei der Stufe (1) verwendete Mittel einwirkt.

9. Verfahren nach einem der Ansprüche 1 bis 8, dadurch gekennzeichnet, daß die Operation der Trennung fest/flüssig mittels Dekantieren oder Filtration durchgeführt wird.

10. Verfahren nach Anspruch 9, dadurch gekennzeichnet, daß die Operation der Trennung fest/flüssig mit Hilfe eines Moduls zur Membran-Ultra-Filtration oder Membran-Mikro-Filtration durchgeführt wird.

11. Verfahren nach einem der Ansprüche 1 bis 10, dadurch gekennzeichnet, daß die am Ende der Stufe (i) erhaltene wäßrige Salzlösung 2 Gew.-% bis 10 Gew.-% Salz enthält.

12. Verfahren nach einem der Ansprüche 1 bis 11, dadurch gekennzeichnet, daß die am Ende der Stufe (ii) erhaltene wäßrige Salzlösung 10 Gew.-% bis 20 Gew.-% Salz enthält.

13. Verfahren nach einem der Ansprüche 1 bis 12, dadurch gekennzeichnet, daß die am Ende der Stufe (iii) gewonnene Base eine Konzentration von mindestens 10 %, insbesondere zwischen 10 % und 35 % aufweist.

14. Verfahren nach einem der Ansprüche 1 bis 13, dadurch gekennzeichnet, daß jede am Ende der Stufe (iii) gewonnene Säure eine Konzentration von mindestens 10 %, insbesondere zwischen 10 % und 20 % aufweist.

15. Verfahren nach einem der Ansprüche 1 bis 14, dadurch gekennzeichnet, daß jede am Ende der Stufe (iii) gewonnene Säure anschließend, gegebenenfalls nach Abtrennung der anderen Säuren, einem Konzentrieren im Hinblick auf die spätere Verwertung, insbesondere als technische Säure, unterzogen wird.

16. Verfahren nach einem der Ansprüche 1 bis 15, dadurch gekennzeichnet, daß die am Ende der Stufe (iii) gewonnene Base Natriumhydroxid ist.

17. Verfahren nach einem der Ansprüche 1 bis 16, dadurch gekennzeichnet, daß die am Ende der Stufe (iii) gewonnene Säure mindestens eine Säure ist, die unter Chlorwasserstoffsäure, Schwefelsäure, Salpetersäure und Fluorwasserstoffsäure ausgewählt wird.

18. Verfahren nach einem der Ansprüche 1 bis 17, dadurch gekennzeichnet, daß die genannten Salze unter Natriumchlorid, Natriumsulfat, Natriumnitrat und Natriumfluorid ausgewählt werden.

19. Verfahren nach einem der Ansprüche 1 bis 18, dadurch gekennzeichnet, daß die Stufe (iii) der Elektro-Elektrodialyse mit Hilfe einer Elektrolysezelle mit drei oder vier Abteilungen durchgeführt wird.

20. Verfahren nach Anspruch 19, dadurch gekennzeichnet, daß die Stufe (iii) der Elektro-Elektrodialyse mit Hilfe einer Elektrolysezelle mit drei Abteilungen durchgeführt wird, die eine für Anionen selektiv permeable Membran, eine für Kationen selektiv permeable Membran, eine Kathode und eine Anode umfaßt.

21. Verfahren nach Anspruch 19, dadurch gekennzeichnet, daß die Stufe (iii) der Elektro-Elektrodialyse mit Hilfe einer Elektrolysezelle mit vier Abteilungen durchgeführt wird, die eine für Anionen selektiv permeable Membran, eine für Kationen selektiv permeable Membran, eine für Kationen permeable Trennwand, eine Kathode und eine Anode umfaßt.

## Claims

1. Process for enhancing the value of an acidic liquid effluent containing heavy metals, characterized in that it consists in:
(i) removing the said heavy metals from the said effluent, in the following manner:
(1) adding at least one agent for trapping or fixing heavy metals to the said effluent,
(2) subjecting the effluent obtained at the end of stage (1) to a solid/liquid separation so as to obtain, on the one hand, a sludge including the said agent laden with heavy metals and, on the other hand, a permeate consisting of a saline aqueous solution containing at least 2% by weight of salts,
(ii) concentrating the saline aqueous solution obtained at the end of stage (i) by evaporation or electrodialysis, so as to obtain a saline aqueous solution containing at least 10% by weight of salts,
(iii) subjecting the saline aqueous solution obtained at the end of stage (ii) to an electro-electrodialysis whereby at least one base, at least one acid and a spent saline aqueous solution are recovered separately,
(iv) optionally recycling the spent saline aqueous solution obtained at the end of stage (iii) to stage (ii).

2. Process according to claim 1, characterized in that the said agent is chosen from the group including zeolites, clays, carbonates, hydroxycarbonates, ion-exchanger materials, materials including at least one compound of the silicate or aluminosilicate type, at least one compound of the carbonate type and, preferably, at least one support, materials including at least one compound of the silicate or aluminosilicate type and at least one support, materials including at least one compound of the carbonate type and at least one support.

3. Process according to claim 2, characterized in that the said agent is a material including at least one compound of the silicate or aluminosilicate type, at least one compound of the carbonate type and, preferably, at least one support.

4. Process according to one of claims 2 and 3, characterized in that the said support is a clay.

5. Process according to one of claims 1 to 4, characterized in that, before step (1), the said liquid effluent is subjected to a preneutralization by addition of at least one base, especially of sodium hydroxide.

6. Process according to claim 5, characterized in that, after preneutralization, the liquid effluent has a pH of between 3 and 5, preferably of the order of 4.

7. Process according to claim 6, characterized in that the effluent obtained at the end of step (1) has a pH of between 8 and 10, preferably of the order of 9.

8. Process according to one of claims 5 to 7, characterized in that control of the pH at the exit from step (2) is performed by modifying the concentrations of the base employed during the preneutralization and/or of the agent employed during step (1).

9. Process according to one of claims 1 to 8, characterized in that the solid/liquid separation operation is performed by sedimentation or filtration.

10. Process according to claim 9, characterized in that the solid/liquid separation operation is performed with the aid of an ultra- or microfiltration module with membranes.

11. Process according to one of claims 1 to 10, characterized in that the saline aqueous solution obtained at the end of stage (i) contains 2 to 10% by weight of salts.

12. Process according to one of claims 1 to 11, characterized in that the saline aqueous solution obtained at the end of stage (ii) contains 10 to 20% by weight of salts.

13. Process according to one of claims 1 to 12, characterized in that the base recovered at the end of stage (iii) has a concentration of at least 10%, in particular between 10 and 35%.

14. Process according to one of claims 1 to 13, characterized in that each acid recovered at the end of stage (iii) has a concentration of at least 10%, in particular between 10 and 20%.

15. Process according to one of claims 1 to 14, characterized in that each acid recovered at the end of stage (iii) is next subjected, optionally after separation from the other acids, to a concentration with a view to a subsequent enhancement in value, especially as technical-grade acid.

16. Process according to one of claims 1 to 15, characterized in that the base recovered at the end of stage (iii) is sodium hydroxide.

17. Process according to one of claims 1 to 16, characterized in that the acid recovered at the end of stage (iii) is at least one acid chosen from hydrochloric acid, sulphuric acid, nitric acid and hydrofluoric acid.

18. Process according to one of claims 1 to 17, characterized in that the said salts are chosen from sodium chloride, sodium sulphate, sodium nitrate and sodium fluoride.

19. Process according to one of claims 1 to 18, characterized in that the electro-electrodialysis stage (iii) is performed with the aid of an electrolysis cell with three or four compartments.

20. Process according to claim 19, characterized in that the electro-electrodialysis stage (iii) is performed with the aid of an electrolysis cell with three compartments, comprising a membrane which is selectively permeable to anions, a membrane which is selectively permeable to cations, a cathode and an anode.

21. Process according to claim 19, characterized in that the electro-electrodialysis stage (iii) is performed with the aid of an electrolysis cell with four compartments, comprising a membrane which is selectively permeable to anions, a membrane which is selectively permeable to cations, a partition which is permeable to cations, a cathode and an anode.
